# EUROPÄISCHE PATENTSCHRIFT

(11) **EP 1 288 164 B1**
(45) Veröffentlichungstag und Bekanntmachung des Hinweises auf die Patenterteilung: **21.06.2006**
(21) Anmeldenummer: 01120973.1
(22) Anmeldetag: 31.08.2001
(51) Int. Cl.: C02F 1/28, C02F 101/32

(54) **Verfahren und mobile Reinigungsanlage zur Reinigung von mit organischen Verbindungen verunreinigten Abwässern**
Process and mobile plant for purifying waste water containing organic substances
Procédé et installation mobile pour la purification des eaux résiduaires contenant des substances organiques

(43) Veröffentlichungstag der Anmeldung: 05.03.2003
(73) Patentinhaber: Adsoca AG, 48432 Rheine (DE)
(72) Erfinder: Ernst, Uwe, 45768 Marl (DE); Gerdau, Herbert, 45721 Haltern (DE)
(74) Vertreter: Motsch, Andreas

(56) Entgegenhaltungen:
- EP-A- 1 055 440
- WO-A-01/38229
- WO-A-84/04087
- DE-U- 9 003 524
- DE-U- 9 211 275
- US-A- 4 383 920
- US-A- 5 972 216
- PATENT ABSTRACTS OF JAPAN vol. 011, no. 242 (C-438), 7. August 1987 (1987-08-07) & JP 62 049914 A (NIPPON ZEON CO LTD), 4. März 1987 (1987-03-04) -& DATABASE WPI Week 198715 Derwent Publications Ltd., London, GB; AN 1987-103992 XP002188469 & JP 62 049914 A

## Beschreibung

Die Erfindung betrifft ein Verfahren zur Reinigung von mit organischen Verbindungen verunreinigten Abwässern. Die Erfindung betrifft weiterhin eine mobile Reinigungsanlage zur Durchführung dieses Verfahrens. - Mit organischen Verbindungen verunreinigte Abwässer meint insbesondere Industrieabwässer, Deponiewässer und Prozesswässer, die beispielsweise in der chemischen Industrie anfallen. Diese Abwässer sind normalerweise mit wasserunlöslichen organischen Verbindungen, insbesondere wasserunlöslichen Kohlenwasserstoffen sowie mit wasserlöslichen organischen Verbindungen, insbesondere wasserlöslichen Kohlenwasserstoffen, verunreinigt. Im Übrigen finden sich in diesen Abwässern häufig Metallkationen, die vor allem auf den Einsatz von Katalysatoren bei chemischen Umsetzungen zurückzuführen sind. Die Abwässer stellen natürlich in umwelttechnischer Hinsicht ein beachtliches Problem dar. Es muss dafür Sorge getragen werden, dass die giftigen bzw. umweltschädlichen Substanzen, die in dem Abwasser enthalten sind, nicht in die Umwelt gelangen und vor allem mit dem Abwasser nicht einfach in das Abwassernetz eingeleitet werden.

Aus der Praxis ist es bislang bekannt, die kontaminierten Abwässer im Rahmen einer Wasserverbrennung zu entsorgen. Es versteht sich, dass dieser Verbrennungsprozess mit einem beachtlichen Energieaufwand verbunden ist und somit auch überaus kostspielig ist. Von erheblichem Nachteil ist weiterhin auch die beachtliche Menge an Kohlendioxid, die bei dem Verbrennungsprozess anfällt und als Abgas in die Umgebung gelangt. Im Übrigen müssen die zu verbrennenden Abwässer zunächst in sehr aufwendiger Weise durch Gefahrguttransporte zu den jeweiligen Verbrennungsanlagen überführt werden. Es versteht sich, dass solche Gefahrguttransporte gewisse Risiken mit sich bringen und deshalb unerwünscht sind.

In der EP 1055440 wird ein Verfahren zur Adsorption von organischen Verbindungen und Adsorptionsmittel aus pulverförmigem Kautschuk beschrieben. In diesem Verfahren werden organische Verbindungen aus einer wasserhaltigen Umgebung adsorbiert, wobei als Adsorptionsmittel pulverförmiger Kautschuk eingesetzt wird, den man durch Ausfällen aus Füllstoff und Kautschuk enthaltenden Suspensionen oder Lösungen gewinnt und wobei Adsorptionsmittel eingesetzt werden, die geeignet sind, gelöste organische Verbindungen und insbesondere in Gewässer ausgetretenes ÖI zu adsorbieren.

In der WO 84/04087 wird eine mobile Reinigungsanlage für Flüssigkeiten beschrieben. Hierbei sind mehrere Tanks so miteinander verbunden, dass sie unterschiedliche Fließmuster erlauben. Mehrere solcher Einheiten können auf größeren Fahrzeugen montiert werden.

Demgegenüber liegt der Erfindung das technische Problem zugrunde, ein Verfahren der eingangs genannten Art anzugeben, mit dem auf effektive, wenig aufwendige und umweltfreundliche Weise die Abwässer gereinigt werden können. Außerdem liegt der Erfindung das technische Problem zugrunde, eine mobile Reinigungsanlage zur Durchführung des Verfahrens anzugeben.

Zur Lösung des vorgenannten technischen Problems lehrt die Erfindung ein Verfahren zur Reinigung von mit organischen Verbindungen verunreinigten Abwässern,
wobei vorzugsweise in einer ersten Reinigungsstufe wasserunlösliche organische Verbindungen aus dem Abwasser abgetrennt werden,
wobei in einer zweiten Reinigungsstufe Kationen aus dem Abwasser entfernt werden,
und wobei in einer dritten Reinigungsstufe lösliche organische Verbindungen aus dem Abwasser abgetrennt werden, indem das Abwasser durch ein Adsorptionsmittel aus pulverförmigem Kautschuk geleitet wird.

Im Rahmen des erfindungsgemäßen Verfahrens wird zwingend mit der als zweite Reinigungsstufe bezeichneten Stufe gearbeitet, in der Kationen aus dem Abwasser entfernt werden und es wird zwingend mit der als dritte Reinigungsstufe bezeichneten Stufe gearbeitet, in der wasserlösliche organische Verbindungen aus dem Abwasser abgetrennt werden. Die als erste Reinigungsstufe bezeichnete Stufe, in der wasserunlösliche organische Verbindungen aus dem Abwasser abgetrennt werden, ist nach sehr bevorzugter Ausführungsform verwirklicht, muss aber nicht zwingend vorhanden sein. Es liegt auch im Rahmen der Erfindung, dass die erste Reinigungsstufe durch Benutzung einer weiter unten noch erläuteten Bypassleitung umgangen wird. Dies ist beispielsweise dann zweckmäßig wenn in dem zu reinigenden Abwasser wasserunlösliche organische Verbindungen, z. B. Öle nicht enthalten sind. - Nach einer sehr bevorzugten Ausführungsform der Erfindung ist die zweite Reinigungsstufe der dritten Reinigungsstufe vorgeschaltet. Es liegt grundsätzlich aber auch im Rahmen der Erfindung, dass die zweite Reinigungsstufe der dritten Reinigungsstufe nachgeschaltet sein kann.

Organische Verbindungen meint im Rahmen der Erfindung insbesondere Kohlenwasserstoffe. Wasserunlösliche organische Verbindungen meint vor allem Öl und dergleichen. Erfindungsgemäß dient die dritte Reinigungsstufe zur Abtrennung von löslichen organischen Verbindungen aus dem Abwasser. In der dritten Reinigungsstufe kann aber auch eine Adsorption von ungelösten organischen Verbindungen stattfinden, wenn diese in der ersten Reinigungsstufe noch nicht abgetrennt wurden.

Wie oben bereits ausgeführt, sind mit wasserunlöslichen Verbindungen insbesondere wasserunlösliche Kohlenwasserstoffe bzw. wasserunlösliche Öle gemeint. Es liegt im Rahmen der Erfindung, dass die wasserunlöslichen organischen Verbindungen in der ersten Reinigungsstufe mechanisch mittels zumindest eines Separators abgetrennt werden. Dabei kann mit einem Abscheider für die wasserunlöslichen organischen Verbindungen gearbeitet werden. Es liegt im Rahmen der Erfindung, eine Zentrifugeneinrichtung zur Abtrennung der wasserunlöslichen organischen Verbindungen im Separator zu verwenden. In dem Separator werden also wasserunlösliche Kohlenwasserstoffe, insbesondere wasserunlösliche Öle, mechanisch von dem Abwasser abgetrennt.

Es liegt im Rahmen der Erfindung, dass in der zweiten Reinigungsstufe Metallkationen aus dem Abwasser entfernt werden. Dabei handelt es sich zweckmäßigerweise um ein-, zwei- und dreiwertige Kationen bzw. Metallkationen. Diese Metallkationen stammen insbesondere von Katalysatoren, die im Rahmen chemischer Umsetzungen bzw. Reaktionen eingesetzt wurden. - Nach sehr bevorzugter Ausführungsform der Erfindung werden die Kationen in der zweiten Reinigungsstufe mittels zumindest einer Siliciumverbindung entfernt. Dabei kann beispielsweise ein geeignetes Aluminiumsilikat oder eine Kieselsäure zur Entfernung der Kationen verwendet werden. Nach einer Ausführungsform, der im Rahmen der Erfindung ganz besondere Bedeutung zukommt, werden die Kationen mittels zumindest eines Natrium-Aluminium-Silikates entfernt. Grundsätzlich liegt es im Rahmen der Erfindung, zur Entfernung der Kationen in der zweiten Reinigungsstufe einen Ionenaustauscher bzw. ein Ionenaustauscherharz zu verwenden.

Von besonderer Bedeutung ist im Rahmen der Erfindung der Einsatz von pulverförmigem Kautschuk in der dritten Reinigungsstufe. Pulverförmiger Kautschuk meint insbesondere rieselfähiges Kautschukpulver und wird auch Pulverkautschuk genannt. Nach sehr bevorzugter Ausführungsform, der im Rahmen der Erfindung ganz besondere Bedeutung zukommt, wird in der dritten Reinigungsstufe mit einem pulverförmigen Kautschuk gearbeitet, der zumindest einen anorganischen und/oder organischen Füllstoff enthält. Der Füllstoffanteil in dem Kautschukpulver beträgt dabei bevorzugt 40 bis 98 Gew.-%, sehr bevorzugt 60 bis 98 Gew.-%. Eine ganz besonders bevorzugte Ausführungsform der Erfindung ist dadurch gekennzeichnet, dass der pulverförmige Kautschuk zumindest einen Ruß als Füllstoff enthält. Als Füllstoffe sind vor allem die aus der Kautschukverarbeitung bekannten Ruße geeignet. Es liegt vor allem auch im Rahmen der Erfindung, Ruße einzusetzen, deren Oberfläche durch oxidative Nachbehandlung modifiziert wurde. Der erfindungsgemäß eingesetzte pulverförmige Kautschuk kann insbesondere zumindest einen Ruß aus der Gruppe "Furnace-Ruß, Gasruß, Flammruß" enthalten. Nach einer Ausführungsform der Erfindung kann als Füllstoff für den pulverförmigen Kautschuk zumindest ein Ruß und/oder zumindest eine Siliciumverbindung eingesetzt werden. Als Siliciumverbindung wird dabei vorzugsweise zumindest eine gefällte und/oder pyrogene Kieselsäure verwendet. Als Siliciumverbindung kann auch ein Silikat, zweckmäßigerweise ein Natrium-Aluminium-Silikat, eingesetzt werden. Es liegt im Rahmen der Erfindung, dass neben dem bevorzugt als Füllstoff eingesetzten Ruß und/oder neben der Siliciumverbindung zumindest ein weiterer Füllstoff in dem pulverförmigen Kautschuk enthalten ist.

Nach sehr bevorzugter Ausführungsform der Erfindung wird der pulverförmige Kautschuk durch Ausfällen aus einer flüssigen, zweckmäßigerweise wasserhaltigen, Mischung ausgefällt, wobei die flüssige Mischung einerseits aus einer Suspension zumindest eines Füllstoffes, vorzugsweise Ruß, besteht und andererseits aus einer wässrigen Emulsion eines Kautschuks oder aus einer Kautschuklösung. Vorzugsweise erfolgt das Ausfällen des pulverförmigen Kautschuks durch Zusatz zumindest eines wasserlöslichen Salzes eines Metalls, das aus den Gruppen IIa, IIb, IIIa oder VIII des periodischen Systems der Elemente (PSE) stammt. Diese Gruppeneinteilung entspricht der alten IUPAC-Empfehlung (s. Periodisches System der Elemente, Verlag Chemie, Weinheim, 1985). Geeignete Salze sind beispielsweise Aluminiumsulfat, Aluminiumchlorid, Magnesiumchlorid, Zinksulfat, Eisenchlorid, Eisensulfat, Kobaltnitrat und Nickelsulfat. Vorzugsweise wird ein Aluminiumsalz zum Ausfällen des pulverförmigen Kautschuks verwendet.
Als Kautschuk bzw. Kautschukkomponente kann ein natürlicher und/oder synthetischer Kautschuk eingesetzt werden. Es liegt im Rahmen der Erfindung, dass der pulverförmige Kautschuk aus zumindest einem Kautschuk der folgenden Gruppe besteht: "Naturkautschuk, Styrol-Butadien-Kautschuk (SBR), Butyl-Acrylnitril-Kautschuk, Butylkautschuk, Butadien-Kautschuk, Isoprenkautschuk, Ethylen-Propylen-Copolymerisat, Ethylen-Propylen-Dien-Perpolymerisat". Weiterhin kann der pulförmige Kautschuk auch aus zumindest einem Kautschuk der folgenden Gruppe bestehen: "Carboxylkautschuk, Epoxidkautschuk, Trans-Polypentenamer, halogenierter Butylkautschuk, Kautschuk aus 2-Chlor-Butadien, Ethylen-Vinylacetat-Copolymer, Epichlorhydrin, chemisch modifizierter Naturkautschuk".

Nach einer Ausführungsform des erfindungsgemäßen Verfahrens wird das Abwasser außer durch die drei vorstehend erläuterten Reinigungsstufen durch noch zumindest eine zusätzliche Reinigungsstufe geleitet, welche zusätzliche Reinigungsstufe als Aktivkohlefilter ausgebildet ist. Es liegt im Rahmen der Erfindung, diese zusätzliche Reinigungsstufe (Aktivkohlefilter) als letzte Reinigungsstufe, zweckmäßigerweise als vierte Reinigungsstufe, vorzusehen. - Das erfindungsgemäße Verfahren wird vorzugsweise so geführt, dass ein Abwasserdurchsatz von 5 bis 15 m³/h, vorzugsweise ein Durchsatz von 8 bis 12 m³/h, durch alle Reinigungsstufen erreicht wird.

Gegenstand der Erfindung ist auch eine mobile Reinigungsanlage zur Durchführung des erfindungsgemäßen Verfahrens,
wobei die Reinigungsanlage einen Eintrittsflansch für das zu reinigende Abwasser sowie einen Austrittsflansch für das gereinigte Abwasser aufweist,
wobei vorzugsweise an den Eintrittsflansch eine erste Reinigungsvorrichtung zum Abtrennen von wasserunlöslichen organischen Verbindungen anschließt,
wobei eine zweite Reinigungsvorrichtung zur Entfernung von Kationen aus dem Abwasser vorgesehen ist, welche zweite Reinigungsvorrichtung einen von dem Abwasser durchströmbaren ersten Reinigungsbehälter aufweist, der eine kationenbindende Substanz enthält
und wobei eine dritte Reinigungsvorrichtung zur Entfernung von wasserlöslichen organischen Verbindungen vorhanden ist, welche dritte Reinigungsvorrichtung einen von dem Abwasser durchströmbaren zweiten Reinigungsbehälter aufweist, der pulverförmigen Kautschuk als Adsorptionsmittel für die wasserlöslichen organischen Verbindungen enthält. - Nach sehr bevorzugter Ausführungsform der Erfindung ist die zweite Reinigungsvorrichtung der ersten Reinigungsvorrichtung nachgeschaltet und ist die dritte Reinigungsvorrichtung der zweiten Reinigungsvorrichtung nachgeschaltet.

Die erfindungsgemäße mobile Reinigungsanlage weist zwingend die zweite Reinigungsvorrichtung und die dritte Reinigungsvorrichtung auf. Die erste Reinigungsvorrichtung ist nach sehr bevorzugter Ausführungsform der Reinigungsanlage verwirklicht, muss aber nicht unbedingt zwingend vorhanden sein. Sehr bevorzugt ist die zweite Reinigungsvorrichtung der dritten Reinigungsvorrichtung vorgeschaltet.

Zweckmäßigerweise ist der Eintrittsflansch für das zu reinigende Abwasser zumindest teilweise transparent ausgebildet und besteht beispielsweise aus Glas. Vorzugsweise ist auch der Austrittsflansch für das gereinigte Abwasser zumindest teilweise transparent ausgeführt und kann ebenfalls aus Glas bestehen. Die transparente Ausführung ermöglicht es, den Trübungsgrad bzw. den Grad der Verunreinigung des über den Eintrittsflansch eintretenden zu reinigenden Abwassers festzustellen sowie den Klarheitsgrad des am Austrittsflansch austretenden gereinigten Abwassers festzustellen. Die erste Reinigungsvorrichtung besteht zweckmäßigerweise aus zumindest einem Separator zum mechanischen Abtrennen der wasserunlöslichen organischen Verbindungen. Es liegt im Übrigen im Rahmen der Erfindung, dass zwischen den einzelnen Reinigungsstufen bzw. zwischen den einzelnen Reinigungsvorrichtungen Pumpen für das Abwasser zwischengeschaltet sind. Jede Reinigungsvorrichtung kann außerdem aus einem oder auch aus mehreren Reinigungsbehältern bestehen.

Besondere Bedeutung kommt im Rahmen der Erfindung der Mobilität der erfindungsgemäßen Reinigungsanlage bzw. Dekontaminationsanlage zu. Erfindungsgemäß kann die Reinigungsanlage dorthin transportiert werden, wo Abwasser gereinigt werden soll, beispielsweise zu entsprechenden Industriebetrieben, Fabriken oder aber auch zu Schiffen. Im Gegensatz zu den aus dem Stand der Technik bekannten Maßnahmen wird also nicht das Abwasser zu der Reinigungsanlage transportiert, sondern umgekehrt die mobile Reinigungsanlage zu dem zu reinigenden Abwasser.

Nach sehr bevorzugter Ausführungsform, der im Rahmen der Erfindung ganz besondere Bedeutung zukommt, ist die mobile Reinigungsanlage dadurch gekennzeichnet, dass ein transportabler Container die erste, die zweite und die dritte Reinigungsvorrichtung aufnimmt und dass dieser transportable Container zum Austausch von Komponenten der Reinigungsvorrichtungen geöffnet werden kann. Es liegt im Rahmen der Erfindung, dass der transportable Container alle Reinigungsvorrichtungen und alle Reinigungsbehälter der erfindungsgemäßen Reinigungsanlage aufnimmt. Transportabler Container meint im Rahmen der Erfindung insbesondere, dass der Container auf einem LKW transportiert werden kann. Grundsätzlich liegt es natürlich auch im Rahmen der Erfindung, dass der Container auf einem Eisenbahnwaggon oder auf einem Schiff oder dergleichen transportiert werden kann.

Der Eintrittsflansch und/oder der Austrittsflansch ist zweckmäßigerweise in einer der Containerseitenwandungen oder in der Containeroberseite oder in dem Containerboden angeordnet. Vorzugsweise ist der transportable Container quaderförmig, d.h. mit rechteckförmigen Wandungen, ausgebildet. Ein solcher quaderförmiger transportabler Container hat zweckmäßigerweise eine Länge von 8 m bis 16 m, vorzugsweise von 10 m bis 14 m, und zweckmäßigerweise eine Breite von 1,50 m bis 3 m, vorzugsweise von 1,80 m bis 2,70 m sowie eine Höhe von bevorzugt 1,50 m bis 3,50 m, sehr bevorzugt von 2 m bis 3 m. Bei einer mobilen Reinigungsanlage mit einem transportablen Container, der die vorgenannten Abmessungen aufweist, kann das erfindungsgemäße Verfahren so geführt werden, dass ein Abwasserdurchsatz von 5 bis 15 m³/h, beispielsweise von etwa 10 m³/h, erreicht wird.

Nach bevorzugter Ausführungsform der Erfindung kann der transportable Container zum Austausch von Komponenten der Reinigungsvorrichtungen geöffnet werden. Eine sehr bevorzugte Ausführungsform der erfindungsgemäßen mobilen Reinigungsanlage ist dadurch gekennzeichnet, dass der erste Reinigungsbehälter einen die kationenbindende Substanz aufnehmenden austauschbaren Einsatz aufweist und/oder dass der zweite Reinigungsbehälter einen den pulverförmigen Kautschuk aufnehmenden austauschbaren Einsatz aufweist. Es liegt auch im Rahmen der Erfindung, dass eventuelle weitere Reinigungsbehälter der erfindungsgemäßen Reinigungsanlage solche austauschbaren Einsätze aufweisen. Nach einer Ausführungsform der Erfindung, der ganz besondere Bedeutung zukommt, kann der Container an seiner Oberseite geöffnet werden und ist der die kationenbindende Substanz aufnehmende austauschbare Einsatz dem ersten Reinigungsbehälter von oben entnehmbar und/oder ist der den pulverförmigen Kautschuk aufnehmende austauschbare Einsatz dem zweiten Reinigungsbehälter von oben entnehmbar. Zweckmäßigerweise kann die gesamte Oberseite des Containers als Deckel aufgeklappt bzw. abgeklappt werden. Ein erfindungsgemäßer austauschbarer Einsatz für einen Reinigungsbehälter ist vorzugsweise als strumpfartiger Einsatz bzw. als netzstrumpfartiger Einsatz ausgebildet. Erfindungsgemäß ist somit ein problemloser Austausch der für die Reinigung des Abwassers erforderlichen Substanzen möglich. Die dem Container entnommenen Substanzen können dann vorzugsweise wieder regeneriert werden und später wieder in die entsprechende Reinigungsstufe bzw. in den entsprechenden Reinigungsbehälter zurückgeführt werden.

Nach einer Ausführungsform der Erfindung ist eine vierte Reinigungsvorrichtung vorgesehen, die als zumindest ein von dem Abwasser durchströmbarer Reinigungsbehälter ausgebildet ist, der Aktivkohle als Adsorptionsmittel enthält. Vorzugsweise ist diese vierte Reinigungsstufe bzw. vierte Reinigungsvorrichtung als letzte Stufe der erfindungsgemäßen Reinigungsanlage vorgesehen.

Nach einer bevorzugten Ausführungsform der Erfindung ist den Reinigungsstufen bzw. den Reinigungsvorrichtungen zumindest eine Messeinrichtung für die Messung des Reinheitsgrades des gereinigten Abwassers nachgeschaltet. Bei der Messeinrichtung kann es sich insbesondere um ein Infrarot-Spektrometer handeln. Mit der Messeinrichtung soll vor allem ermittelt werden, ob und in welchem Ausmaß in dem gereinigten Abwasser noch CH-, CH₂-, CH₃-Gruppen und/oder CH-Mehrfachbindungen enthalten sind. Als Messeinrichtung kann beispielsweise auch ein Ultraviolett-Spektrometer eingesetzt werden. Es liegt im Rahmen der Erfindung, dass in Abhängigkeit von den mit der Messeinrichtung gemessenen Messwerten die Verweilzeit in der Reinigungsanlage bzw. die Verweilzeiten in den einzelnen Reinigungsvorrichtungen eingerichtet werden.

Der Erfindung liegt die Erkenntnis zugrunde, dass mit dem erfindungsgemäßen Verfahren eine sehr effektive und funktionssichere Reinigung von Abwässern erzielt werden kann, wobei wasserunlösliche und wasserlösliche organische Verbindungen ebenso wie Metallkationen wirksam aus dem Abwasser entfernt werden können. Der Reinheitsgrad des erfindungsgemäß behandelten Abwassers ist so hoch, dass das gereinigte Abwasser problemlos in das normale Abwassernetz eingeleitet werden kann. Im Hinblick auf die eingangs erläuterten, aus dem Stand der Technik bekannten Maßnahmen zeichnet sich das erfindungsgemäße Verfahren durch Einfachheit und geringen Aufwand aus. Insbesondere ist der Energieaufwand gering und auch umweltschädliche Emissionen können so gut wie vollständig vermieden werden. Das erfindungsgemäße Verfahren kann ohne weiteres wirksam und funktionssicher in einer mobilen Reinigungsanlage durchgeführt werden. Dies ermöglicht es, dass die Abwässer vor Ort mit der mobilen Reinigungsanlage gereinigt werden können. Auch insoweit zeichnet sich die Erfindung gegenüber den aus dem Stand der Technik bekannten Maßnahmen durch Einfachheit und Wirtschaftlichkeit aus. Die nach dem Stand der Technik erforderlichen Gefahrguttransporte zu Verbrennungsanlagen entfallen vollständig, weil erfindungsgemäß und im Gegensatz zum Stand der Technik die Reinigungsanlage zu dem zu reinigenden Abwasser transportiert wird. Da die Effektivität der erfindungsgemäßen Reinigung sehr hoch ist, kann eine mobile Reinigungsanlage mit relativ geringem Volumen und geringem Gewicht verwirklicht werden, so dass ein problemloser Transport möglich ist. Aufgrund des relativ geringen Volumens und relativ geringen Gewichtes der Reinigungsanlage und ihrer Komponenten ist auch ein einfacher Austausch der einzelnen Komponenten bzw. der für die Reinigung erforderlichen Substanzen realisierbar. Im Ergebnis zeichnet sich das erfindungsgemäße Verfahren und insbesondere auch die erfindungsgemäße mobile Reinigungsanlage durch beachtliche Vorteile aus.

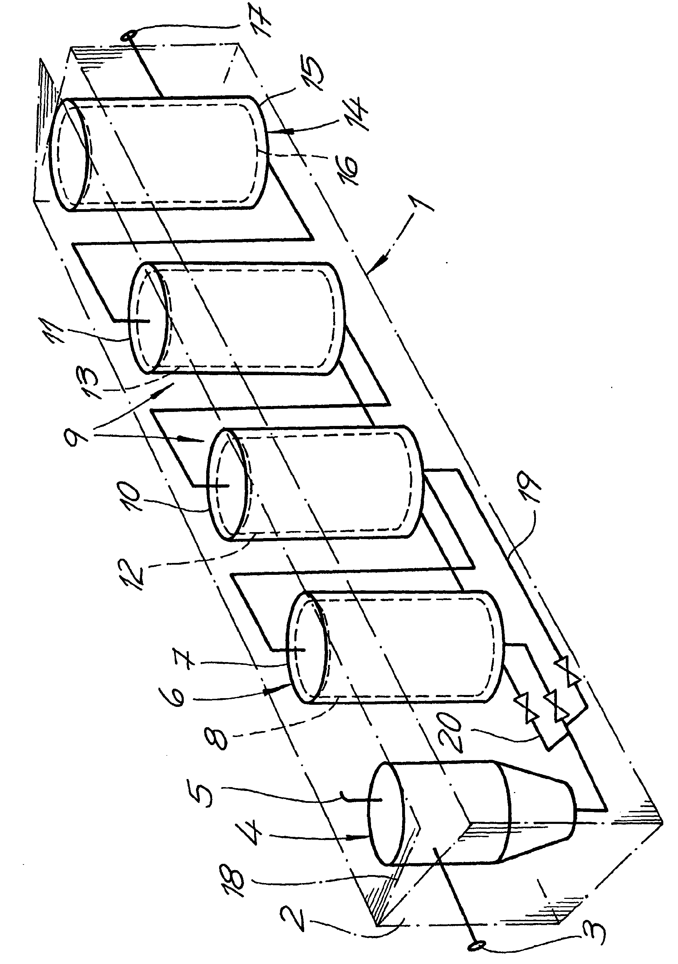

Nachfolgend wird die Erfindung anhand einer lediglich ein Ausführungsbeispiel darstellenden Zeichnung näher erläutert. Die einzige Figur zeigt eine erfindungsgemäße mobile Reinigungsanlage zur Durchführung eines Verfahrens zur Reinigung von mit organischen Verbindungen verunreinigten Abwässern.

Die in der Figur dargestellte mobile Reinigungsanlage besteht aus einem transportablen Container 1 der vorzugsweise und im Ausführungsbeispiel quaderförmig ausgebildet ist und die verschiedenen Komponenten der Reinigungsanlage aufnimmt. In einer der Seitenwandungen 2 ist ein Eintrittsflansch 3 für das zu reinigende Abwasser vorgesehen. An diesen Eintrittsflansch 3 ist eine nicht dargestellte Zuführungsleitung für das zu reinigende Abwasser anschließbar. An den Eintrittsflansch 3 schließt dann eine Reinigungsstufe an, die eine erste Reinigungsvorrichtung 4 zum Abtrennen von wasserunlöslichen organischen Verbindungen aus dem Abwasser aufweist. Die erste Reinigungsvorrichtung 4 besteht zweckmäßigerweise und im Ausführungsbeispiel aus einem Separator zum mechanischen Abtrennen der wasserunlöslichen organischen Verbindungen. An der Oberseite der ersten Reinigungsvorrichtung 4 ist eine Ableitung 5 für die abgetrennten wasserunlöslichen organischen Verbindungen, insbesondere für Öl, vorgesehen. Im Ausführungsbeispiel tritt das Abwasser unten aus der ersten Reinigungsvorrichtung 4 aus und wird dann zu einer zweiten Reinigungsstufe geführt, die eine zweite Reinigungsvorrichtung 6 zur Entfernung von Metallkationen aus dem Abwasser umfasst. Die zweite Reinigungsvorrichtung 6 besteht im Ausführungsbeispiel aus einem von dem Abwasser durchströmbaren ersten Reinigungsbehälter 7, der eine kationenbindende Substanz enthält. Die kationenbindende Substanz ist dabei in einem ersten austauschbaren Einsatz 8 aufgenommen, der in den ersten Reinigungsbehälter 7 eingepasst ist. Das Abwasser durchströmt im Ausführungsbeispiel den ersten Reinigungsbehälter 7 von unten nach oben. Das oben aus dem ersten Reinigungsbehälter 7 austretende Abwasser wird dann in eine dritte Reinigungsstufe bzw. in eine dritte Reinigungsvorrichtung 9 eingeleitet, in der lösliche organische Verbindungen aus dem Wasser abgetrennt werden. Zweckmäßigerweise und im Ausführungsbeispiel besteht die dritte Reinigungsvorrichtung 9 aus einem zweiten Reinigungsbehälter 10 sowie einem dritten Reinigungsbehälter 11, die jeweils pulverförmigen Kautschuk als Adsorptionsmittel für die löslichen organischen Verbindungen enthalten. Der pulverförmige Kautschuk wird dabei von einem austauschbaren zweiten Einsatz 12 aufgenommen, der in den zweiten Reinigungsbehälter 10 eingepasst ist und wird von einem dritten Einsatz 13 aufgenommen, der in den dritten Reinigungsbehälter 11 eingepasst ist. Das Abwasser durchströmt den zweiten Reinigungsbehälter 10 im Ausführungsbeispiel von unten nach oben und auch der dritte Reinigungsbehälter 11 wird von dem Abwasser von unten nach oben durchströmt.

Das Abwasser wird dann von der dritten Reinigungsstufe bzw. von der dritten Reinigungsvorrichtung 9 in eine vierte Reinigungsstufe bzw. vierte Reinigungsvorrichtung 14 geleitet. Diese vierte Reinigungsvorrichtung 14 weist einen vierten Reinigungsbehälter 15 auf, der von dem Abwasser durchströmt wird und Aktivkohle als Adsorptionsmittel enthält. Die Aktivkohle wird dabei von einem austauschbarem vierten Einsatz 16 aufgenommen, der in den vierten Reinigungsbehälter 15 eingepasst ist. Auch der vierte Reinigungsbehälter 15 wird von dem Abwasser von unten nach oben durchströmt. An die vierte Reinigungsvorrichtung 14 bzw. an den vierten Reinigungsbehälter 15 schließt dann ein Austrittsflansch 17 für das gereinigte Abwasser an. Die erfindungsgemäße Reinigung des Abwassers ist so effektiv, dass aus dem Austrittsflansch 17 gereinigtes Abwasser austritt, das unbedenklich in das Abwassernetz eingeleitet werden kann.

Der die Komponenten der Reinigungsanlage aufnehmende Container weist an seiner Oberseite einen aufklappbaren Deckel 18 auf. Bei geöffnetem Deckel 18 können je nach Bedarf die Einsätze 8, 12, 13 und 16 aus den jeweiligen Reinigungsbehältern 7, 10, 11 und 15 herausgenommen und evtl. ausgetauscht werden. Die in den herausgenommenen Einsätzen enthaltenen Substanzen können dann vorzugsweise regeneriert werden und zu einem späteren Zeitpunkt wieder mit einem Einsatz 8, 12, 13 bzw. 16 in den betreffenden Reinigungsbehälter 7, 10, 11 bzw. 15 zurückgeführt werden. Die Einsätze 8, 12, 13 und 16 sind vorzugsweise als strumpfartige bzw. netzstrumpfartige Einsätze ausgebildet, die die jeweilige für die Reinigung erforderliche Substanz enthalten.

In der einzigen Figur ist erkennbar, dass im Anschluss an die erste Reinigungsvorrichtung 4 eine erste Bypassleitung 19 vorgesehen ist, die die erste Reinigungsvorrichtung 4 unmittelbar mit der dritten Reinigungsvorrichtung 9 bzw. mit dem zweiten Reinigungsbehälter 10 verbindet. Mit der Bypassleitung 19 kann also die zweite Reinigungsvorrichtung 6 bzw. deren erster Reinigungsbehälter 7 von dem Abwasser umgangen werden. Weiterhin kann die erste Reinigungsvorrichtung 4 über eine zweite Bypassleitung 20 unmittelbar auch mit dem dritten Reinigungsbehälter 11 der dritten Reinigungsvorrichtung 9 verbunden werden, wobei dann der erste Reinigungsbehälter 7 sowie der zweite Reinigungsbehälter 10 umgangen werden. Grundsätzlich können solche Bypassleitungen 19, 20 an allen Reinigungsstufen bzw.

Reinigungsbehältern eingerichtet werden, so dass ein sehr flexibler und variabler Einsatz der einzelnen Reinigungsbehälter 7, 10, 11 und 15 möglich ist.

Nach einer bevorzugten Ausführungsform der Erfindung ist an den Austrittsflansch 17 oder zwischen dem vierten Reinigungsbehälter 15 und dem Austrittsflansch 17 eine nicht dargestellte Messeinrichtung angeschlossen, mit der der Reinheitsgrad des gereinigten Abwassers gemessen werden kann. Dabei kann es sich beispielsweise um ein IR-Spektrometer handeln. - Die in der Figur dargestellte mobile Reinigungsanlage bzw. der Container 1, der die Komponenten der Reinigungsanlage aufnimmt, kann problemlos auf einem LKW transportiert werden.

## Patentansprüche

1. Verfahren zur Reinigung von mit organischen Verbindungen verunreinigten Abwässern,
wobei vorzugsweise in einer ersten Reinigungsstufe wasserunlösliche organische Verbindungen aus dem Abwasser abgetrennt werden,
wobei in einer zweiten Reinigungsstufe Kationen aus dem Abwasser entfernt werden,
und wobei in einer dritten Reinigungsstufe lösliche organische Verbindungen aus dem Abwasser abgetrennt werden, indem das Abwasser durch ein Adsorptionsmittel aus pulverförmigem Kautschuk geleitet wird.

2. Verfahren nach Anspruch 1, wobei die wasserunlöslichen organischen Verbindungen in der ersten Reinigungsstufe mechanisch mittels zumindest eines Separators abgetrennt werden.

3. Verfahren nach einem der Ansprüche 1 oder 2, wobei die Kationen in der zweiten Reinigungsstufe mittels zumindest einer Siliciumverbindung entfernt werden.

4. Verfahren nach Anspruch 3, wobei die Kationen mittels zumindest eines Natrium-Aluminium-Silikates entfernt werden.

5. Verfahren nach einem der Ansprüche 1 bis 4, wobei in der dritten Reinigungsstufe mit einem pulverförmigen Kautschuk gearbeitet wird, der zumindest einen anorganischen und/oder organischen Füllstoff enthält.

6. Verfahren nach Anspruch 5, wobei der pulverförmige Kautschuk zumindest einen Ruß als Füllstoff enthält.

7. Verfahren nach einem der Ansprüche 1 bis 6, wobei das Abwasser durch zumindest eine zusätzliche Reinigungsstufe, die als Aktivkohlefilter ausgebildet ist, geleitet wird.

8. Mobile Reinigungsanlage zur Durchführung des Verfahrens nach einem der Ansprüche 1 bis 7, mit einem Eintrittsflansch (3) für das zu reinigende Abwasser und einem Austrittsflansch (17) für das gereinigte Abwasser,
wobei vorzugsweise an den Eintrittsflansch (3) eine erste Reinigungsvorrichtung (4) zum Abtrennen von wasserunlöslichen organischen Verbindungen anschließt,
wobei eine zweite Reinigungsvorrichtung (6) zur Entfernung von Kationen aus dem Abwasser vorgesehen ist, welche zweite Reinigungsvorrichtung (6) einen von dem Abwasser durchströmbaren ersten Reinigungsbehälter (7) aufweist, der eine kationenbindende Substanz enthält
und wobei eine dritte Reinigungsvorrichtung (9) zur Entfernung von wasserlöslichen organischen Verbindungen vorhanden ist, welche dritte Reinigungsvorrichtung (9) einen von dem Abwasser durchströmbaren zweiten Reinigungsbehälter (10) aufweist, der pulverförmigen Kautschuk als Adsorptionsmittel für die wasserlöslichen organischen Verbindungen enthält.

9. Mobile Reinigungsanlage nach Anspruch 8, wobei ein transportabler Container (1) die erste, die zweite und die dritte Reinigungsvorrichtung (4, 6, 9) aufnimmt und wobei der transportable Container (1) zum Austausch von Komponenten der Reinigungsvorrichtungen (4, 6, 9) geöffnet werden kann.

10. Mobile Reinigungsanlage nach einem der Ansprüche 8 oder 9, wobei der erste Reinigungsbehälter (7) einen die kationenbindende Substanz aufnehmenden austauschbaren ersten Einsatz (8) aufweist und/oder wobei der zweite Reinigungsbehälter (10) einen den pulverförmigen Kautschuk aufnehmenden austauschbaren zweiten Einsatz (12) aufweist.

11. Mobile Reinigungsanlage nach Anspruch 10, wobei der Container (1) an seiner Oberseite geöffnet werden kann und wobei der die kationenbindende Substanz aufnehmende austauschbare erste Einsatz (8) dem ersten Reinigungsbehälter (7) von oben entnehmbar ist und/oder wobei der den pulverförmigen Kautschuk aufnehmende austauschbare zweite Einsatz (12) dem zweiten Reinigungsbehälter (10) von oben entnehmbar ist.

12. Mobile Reinigungsanlage nach einem der Ansprüche 8 bis 11, wobei eine vierte Reinigungsvorrichtung (14) vorgesehen ist, die als zumindest ein von dem Abwasser durchströmbarer Reinigungsbehälter (15) ausgebildet ist, der Aktivkohle als Adsorptionsmittel enthält.

13. Mobile Reinigungsanlage nach einem der Ansprüche 1 bis 12, wobei den Reinigungsvorrichtungen (4, 6, 9, 14) zumindest eine Messeinrichtung für die Messung des Reinheitsgrades des gereinigten Abwassers nachgeschaltet ist.

## Claims

1. Process for purifying waste water contaminated by organic compounds,
wherein preferably in a first purifying step water insoluble organic compounds are separated from the waste water,
wherein in a second purifying step cations are removed from the waste water,
and wherein in a third purifying step soluble organic compounds are separated from the waste water by conducting the waste water through an adsorbent consisting of pulverulent rubber.

2. Process according to claim 1, wherein said water insoluble organic compounds in said first purifying step are mechanically separated by means of at least one separator.

3. Process according to any of the claims 1 or 2, wherein said cations in said second purifying step are removed by means of at least a silicon compound.

4. Process according to claim 3, wherein said cations are separated by means of at least a sodium aluminium silicate.

5. Process according to any of the claims 1 to 4, wherein in said third purifying step a pulverulent rubber is used which contains at least an inorganic and/or organic filler.

6. Process according to claim 5, wherein said pulverulent rubber contains at least carbon black as filler.

7. Process according to any of the claims 1 to 6, wherein said waste water is conducted through at least one additional purifying step which is provided as activated carbon filter.

8. Mobile purifying plant for carrying-out said process according to any of the claims 1 to 7, with an inlet flange (3) for the waste water to be purified and an outlet flange (17) for the purified waste water,
wherein said inlet flange (3) is preferably succeeded by a first purifying device (4) for separating the water insoluble organic compounds,
wherein a second purifying device (6) for removing cations from said waste water is provided, said second purifying device (6) comprising a first purifying vessel (7) permeable to said waste water, said vessel contains a cation binding substance,
and wherein a third purifying device (9) for the removal of water soluble organic compounds is provided, said third purifying device (9) comprising a second purifying vessel (10) permeable to said waste water, said vessel contains pulverulent rubber as adsorbent for the water soluble organic compounds.

9. Mobile purifying plant according to claim 8, wherein a transportable container (1) takes up said first, said second and said third purifying devices (4, 6, 9) and wherein said transportable container (1) can be opened for replacing the components of said purifying devices (4, 6, 9).

10. Mobile purifying plant according to any of the claims 8 or 9, wherein said first purifying vessel (7) comprises a replaceable first insert (8) which takes up said cation binding substance and/or wherein said second purifying vessel (10) comprises a replaceable second insert (12) which takes up the pulverulent rubber.

11. Mobile purifying plant according to claim 10, wherein said container (1) may be opened at its top surface and wherein said replaceable first insert (8) which takes up the cation binding substance may be removed from the first purifying vessel (7) from the top and/or wherein said replaceable second insert (12) which takes up the pulverulent rubber may be removed from the second purifying vessel (10) from the top.

12. Mobile purifying plant according to any of the claims 8 to 11, wherein a fourth purifying device (14) is provided which is provided as at least one purifying vessel (15) permeable to waste water, which contains activated carbon as adsorbent.

13. Mobile purifying plant according to any of the claims 1 to 12, wherein said purifying devices (4, 6, 9, 14) are succeeded by at least one measuring means for measuring the degree of purity of the purified waste water.

## Revendications

1. Procédé pour l'épuration d'eaux résiduaires polluées avec des composés organiques,
où de préférence, dans une première étape d'épuration, de l'eau résiduaire on sépare les composés organiques insolubles dans l'eau,
où dans une deuxième étape d'épuration, de l'eau résiduaire on élimine les cations,
et où dans une troisième étape d'épuration, de l'eau résiduaire on sépare les composés organiques solubles, en ce que l'eau résiduaire est dirigée au travers d'un matériel absorbant en caoutchouc pulvérulent.

2. Procédé selon la revendication 1, où les composés organiques insolubles dans l'eau de la première étape d'épuration sont séparés par voie mécanique au moyen d'au moins un séparateur.

3. Procédé selon l'une quelconque des revendications 1 ou 2, où les cations de la deuxième étape d'épuration sont éliminés au moyen d'au moins un composé de silicium.

4. Procédé selon la revendication 3, où les cations sont éliminés au moyen d'au moins un silicate de natrium-aluminium.

5. Procédé selon l'une quelconque des revendications 1 jusqu'à 4, où dans la troisième étape d'épuration on travaille avec un caoutchouc pulvérulent, qui consiste dans au moins un matériel de remplissage inorganique et/ou organique.

6. Procédé selon la revendication 5, où le caoutchouc pulvérulent consiste dans au moins un noir de fumée, comme matériel de remplissage.

7. Procédé selon l'une quelconque des revendications 1 jusqu'à 6, où l'eau résiduaire est dirigée par au moins une étape d'épuration supplémentaire, qui est composée comme un filtre actif de charbon.

8. Installation mobile d'épuration pour la réalisation du procédé selon l'une quelconque des revendications 1 jusqu'à 7, avec un collet d'entrée (3) pour l'eau résiduaire qui va être épurée et un collet de sortie (17) pour l'eau épurée
où de préférence au collet d'entrée (3) on raccorde un premier dispositif d'épuration (4) pour la séparation des composés organiques insolubles dans l'eau,
où on a pourvu un deuxième dispositif d'épuration (6) pour l'élimination des cations hors de l'eau résiduaire, qui ce deuxième dispositif d'épuration (6) comporte un premier réservoir d'épuration (7) au travers duquel s'écoule l'eau résiduaire, et qui consiste en une substance qui fixe les cations,
et où il y a un troisième dispositif d'épuration (9) pour l'élimination des composés organiques solubles dans l'eau, qui ce troisième dispositif d'épuration (9) comporte un deuxième réservoir d'épuration (10) au travers duquel s'écoule l'eau résiduaire, et qui consiste en un caoutchouc pulvérulent comme matériel absorbant pour les composés organiques solubles dans l'eau.

9. Installation mobile d'épuration selon la revendication 8, où un container transportable (1) comprend le premier, le deuxième et le troisième dispositif d'épuration (4, 6, 9) et où le container transportable (1) peut être ouvert pour remplacer les composants des dispositifs d'épurations (4, 6, 9).

10. Installation mobile d'épuration selon l'une quelconque des revendications 8 ou 9, où le premier réservoir d'épuration (7) comporte un premier composant interchangeable (8) qui contient la substance qui fixe les cations et/ou dans laquelle le deuxième réservoir d'épuration (10) comporte un deuxième composant interchangeable (12) qui contient le caoutchouc pulvérulent.

11. Installation mobile d'épuration selon la revendication 10, où le container (1) peut être ouvert à sa partie supérieure et où le premier composant interchangeable (8) qui contient la substance qui fixe les cations, peut être extrait d'en haut hors du premier réservoir d'épuration (7) et/ou dans laquelle le deuxième composant interchangeable (12) qui contient le caoutchouc pulvérulent peut être extrait d'en haut hors du deuxième réservoir d'épuration (10).

12. Installation mobile d'épuration selon l'une quelconque des revendications 8 jusqu'à 11, où on a pourvu un quatrième dispositif d'épuration (14), composé comme au moins un réservoir d'épuration (15) au travers duquel s'écoule l'eau résiduaire, et qui comme matériel absorbant comporte un charbon actif.

13. Installation mobile d'épuration selon l'une quelconque des revendications 1 jusqu'à 12, où après les dispositifs d'épuration (4, 6, 9, 14) au moins un dispositif de mesure est raccordé pour la mesure du degré de pureté de l'eau résiduaire purifiée.
